# EUROPEAN PATENT APPLICATION

(11) **EP 4 173 473 A1**
(43) Date of publication of application: **03.05.2023**
(21) Application number: 21861111.9
(22) Date of filing: 29.07.2021
(51) Int. Cl.: A01G 7/00

(54) **PLANT DIMENSION MEASURING METHOD**

(30) Priority: 27.08.2020 JP 2020143604
(71) Applicant: OMRON Corporation, Kyoto 600-8530 (JP)
(72) Inventor: ZENG, Xiangyu, Kyoto-shi, Kyoto 600-8530 (JP)
(74) Representative: Isarpatent
(86) International application number: PCT/JP2021/028074
(87) International publication number: WO 2022/044683

(57) **Abstract**

A method for measuring a dimension of a plant can calculate the dimension of a dimensional measurement point of a plant stem efficiently with high accuracy using an improved method for analyzing a captured image of a plant stem. The method includes, in capturing an image of a predetermined dimensional measurement point of a plant stem with an imager, placing, behind the plant, a background plate including a dimensional reference, and calculating the dimension of the plant stem at the dimensional measurement point based on data obtained at multiple points along the plant stem in image analysis.

## Description

### TECHNICAL FIELD

The present invention relates to a method for measuring a dimension of a plant.

### BACKGROUND

An example known method for measuring a dimension of a plant uses a measurement tool such as a tape measure or a caliper placed in contact with a plant stem to measure the diameter of the plant stem. However, such contact with the plant during measurement may negatively affect the vegetative growth of the plant. Further, to measure the diameter of the plant stem at a branching portion of the plant, the branching portion can obstruct placement of the measurement tool into contact with the plant.

Another example measurement method for plants may be a system that captures an image of a target plant from above with an imager and measures the characteristics of the plant stem through image analysis (refer to, for example, Patent Literature 1). Such image analysis allows simple and highly accurate measurement of a plant with little contact with the plant.

A method for measuring a dimension of a plant using image analysis may use a white background plate including black markers placed behind the plant when an image of the plant is captured. However, placing the plant stem in close contact with the white background plate is actually difficult when the plant is three-dimensional and has branches and leaves, thus causing a measurement error resulting from the distance between the plant stem and the white background plate.

### Related Art Documents

### Patent Documents

Patent Literature 1: Japanese Unexamined Patent Application Publication No. 2017-104037

### SUMMARY

### TECHNICAL PROBLEM

With the measurement method described above, the white background plate may be placed behind the plant to evaluate the degree of vegetative growth of the plant, and a digital camera or another imager may be used to capture an image of the plant stem. The diameter of the plant stem may then be measured using a predetermined image analysis program. Although the plant stem and the background plate are actually at a distance from each other, this method yields a value for the plant stem that is hypothetically in close contact with the white background plate. The measurement value of the plant stem diameter using the image analysis program can thus often exceed the true value. Further, measuring the distance between the plant stem and the white background plate using the image analysis program is difficult.

In response to a measurement error described above, one or more aspects of the present invention are directed to an improved method for capturing an image of a plant stem and measuring a dimension of the plant to reduce an error in the measurement value of the diameter of the plant stem. The vegetative growth of the plant is to be managed based on the measurement value of the diameter of the plant stem measured with high reliability.

The method for measuring a dimension of a plant according to the above aspects of the present invention may use a parameter to be measured other than the diameter of the plant stem.

### SOLUTION TO PROBLEM

A method according to an aspect of the present invention is a method for measuring a dimension of a plant at a predetermined dimensional measurement point of a stem of the plant with an image of the stem captured with an imager. The method includes placing, behind the plant, a background plate including a dimensional reference, measuring the dimension of the plant at a plurality of points along the stem, and calculating the dimension of the plant at the dimensional measurement point based on data obtained at the plurality of points.

In the above aspect of the present invention, the dimension at the dimensional measurement point can be calculated using the overall shape of the plant stem based on measurement values at the plurality of points, rather than the dimension being calculated based on a measurement value at a single point, or specifically, at the single dimensional measurement point. The dimension at the dimensional measurement point can thus be calculated with high accuracy. The measurement of the dimension at the plurality of points in the aspect of the present invention uses the same dimensional reference on the background plate.

In the above aspect of present invention, the dimensional measurement point may be at a predetermined length below a growth point of the plant. The dimension may include a diameter or a width of the stem. The calculating the dimension of the plant at the dimensional measurement point may include obtaining an approximate curve of a relationship between the dimension of the plant at the plurality of points and lengths from the growth point at the plurality of points. This structure increases the reliability of the dimensional value obtained using the approximate curve of the relationship between the length from the growth point and the dimension. In the above aspect of the present invention, the predetermined length may be, for example, 20 cm.

In the above aspect of present invention, the background plate may include a mark indicating a positional reference of the growth point and a plurality of indicators located at predetermined lengths from the mark. This allows a measurer to easily determine the position of the growth point in capturing an image of the plant with the imager. This also allows the measurer to easily determine the position of the plant stem to be the dimensional measurement point from the growth point. In the above aspect of the present invention, the plurality of indicators may be located in a range of up to, for example, 30 cm below the mark indicating the positional reference of the growth point.

In the above aspect of present invention, the background plate may include a horizontal portion extending horizontally and a vertical portion extending vertically from a middle of the horizontal portion in a horizontal direction when placed behind the plant. The background plate may have a T shape reversed upside down. The dimensional reference may be located in each of portions of the horizontal portion across the vertical portion in the horizontal direction. The mark indicating the positional reference of the growth point and the plurality of indicators may be arranged vertically in the vertical portion. The background plate with the T shape reversed upside down can be placed behind the plant stem more easily. Compared with a background plate with a rectangular shape, the background plate having the T shape reversed upside down can reduce the likelihood that the front-rear distance increases between the plant stem and the background plate when the plant growth point is three-dimensional and has branches and leaves, thus improving the measurement accuracy of the dimension of the plant stem.

The method according to the above aspect of present invention may further include capturing an image of the dimensional measurement point. The capturing may include displaying an imaging mask being a frame on an imaging screen of the imager, and placing the dimensional measurement point and the dimensional reference at a predetermined position inside the imaging mask on the imaging screen of the imager to determine a positional relationship between the dimensional measurement point and the dimensional reference. This facilitates positioning of the plant stem in capturing an image of the plant stem and prevents a measurement error due to use of the plant stem being too close to an edge.

### ADVANTAGEOUS EFFECTS

In the above aspects of the present invention, the dimension of the plant can be efficiently measured with high accuracy to more accurately manage plant cultivation based on the obtained dimensional value. For measuring the diameter of the plant stem, for example, the obtained value can be used to more accurately determine whether the plant has an appropriate level of the vegetative growth for more accurate adjustment of the amounts of water and fertilizer.

### BRIEF DESCRIPTION OF THE DRAWINGS

FIG. 1 is a schematic diagram of an imaging operation of a plant stem with an imager.
FIG. 2 is a schematic diagram of a background plate having reference marks for aligning a growth point of the plant and indicators indicating lengths below the growth point, showing the surface features of the background plant.
FIG. 3A and FIG. 3B are schematic diagrams of a method for measuring a diameter of the plant stem using an image analysis program after an imaging operation.
FIG. 4 is a schematic diagram of an imaging mask on an imaging screen viewed by the measurer when an image of a plant stem and the background plate is captured with the imager.
FIG. 5 is a schematic diagram of a background plate with another shape in a modification.

### DETAILED DESCRIPTION

[Example Use] In an example use, a method for measuring the diameter of a plant stem will be described as an example of a method for measuring a dimension of a plant. The method for measuring the diameter of a plant stem includes placing, behind the plant stem, a white background plate including markers located at a predetermined distance from one another to provide more accurate information on the position coordinates of a measurement point as a target. With the background plate placed behind the plant stem as the measurement target, an image of the plant stem and the background plate is captured, the positions of measurement points of the plant stem are obtained with high accuracy, and the diameter of the plant stem at the measurement points in the image can be measured based on the distance between the markers on the white background plate in analyzing the captured image.

In analyzing the captured image using an image analysis program, an upper end of the plant stem is used as the growth point of the target plant, and the diameter of the plant stem is measured at multiple points along the plant stem. The formula for the approximate curve can be obtained from data at the multiple points and can be used to determine the diameter of the stem at, for example, 20 cm below the growth point.

### [First Embodiment]

The method for measuring a dimension of a plant according to a first embodiment of the present invention will be described in detail with reference to the drawings. The measurement of the plant stem diameter will be described as the measurement of the dimension of the plant in the embodiment of the present invention.

### <Dimensional Measurement Method>

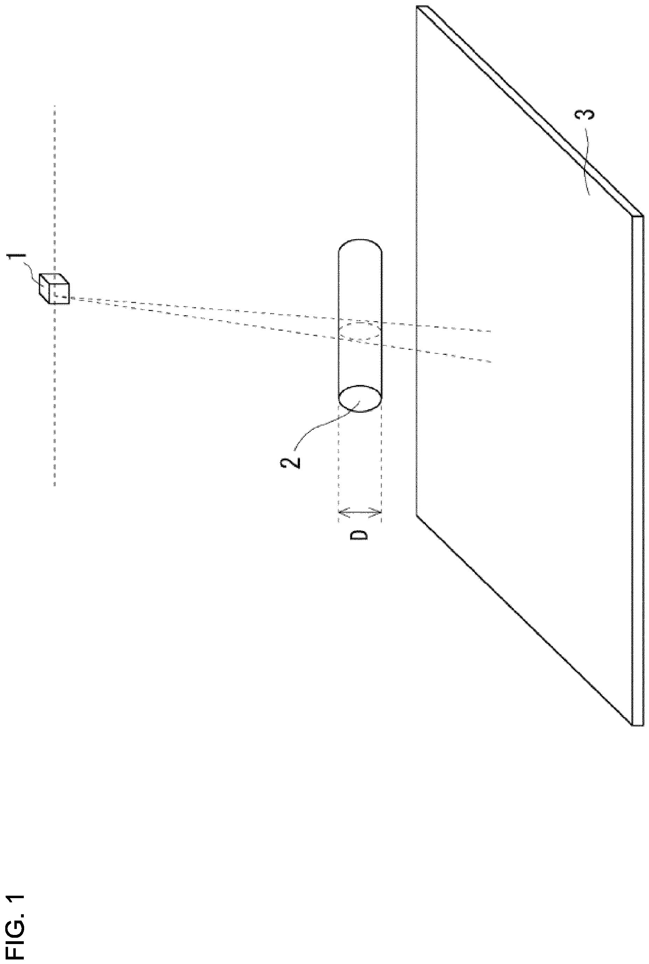

FIG. 1 is a schematic diagram of an imaging operation of a plant stem 2 with an imager 1. For example, the imager 1 may typically be a digital camera. An image of the plant stem 2 is captured with the imager 1 with the background plate 3 placed behind the plant stem 2. A measurement point is identified in image analysis, for which the diameter is then measured. Although the background plate 3 is typically white, the background plate 3 may have a color hue different from the color hue of the plant stem 2 for differentiation from the plant stem 2. The width of the plant stem 2 is calculated based on a distance between markers 5 (not shown) on the background plate 3, and the diameter is calculated using the width of the plant stem 2. The growth point of the plant herein refers to an actively dividing cellular portion at the tip of the plant stem.

In measuring the diameter of the plant stem 2, the diameter of a portion at 20 cm below the plant growth point is specifically stable. The diameter measured at this position can be a reliable true value of the diameter of the plant stem 2. For the image captured with the imager 1 and analyzed using the image analysis program, the portion at 20 cm below the growth point (this portion is hereafter also referred to as a dimensional measurement point) may be determinable by the measurer. The background plate 3 includes measurement lines 8 (not shown) used as scales to assist length measurement. In the present embodiment, the diameter of the plant stem 2 is measured at each predetermined length from the growth point during analysis, and the approximate curve is obtained from these values to determine the diameter of the dimensional measurement point at 20 cm below the growth point. Although the surface of the background plate 3 is shown as being rectangular, the shape is not limited to the rectangle.

In the present embodiment, when the imager 1 is used to capture an image of the plant stem 2, the background plate 3 shown in FIG. 1 is used with an additional reference marks to align the plant growth point and indicators indicating lengths below the plant growth point as described below.

### <Dimensional Measurement Method>

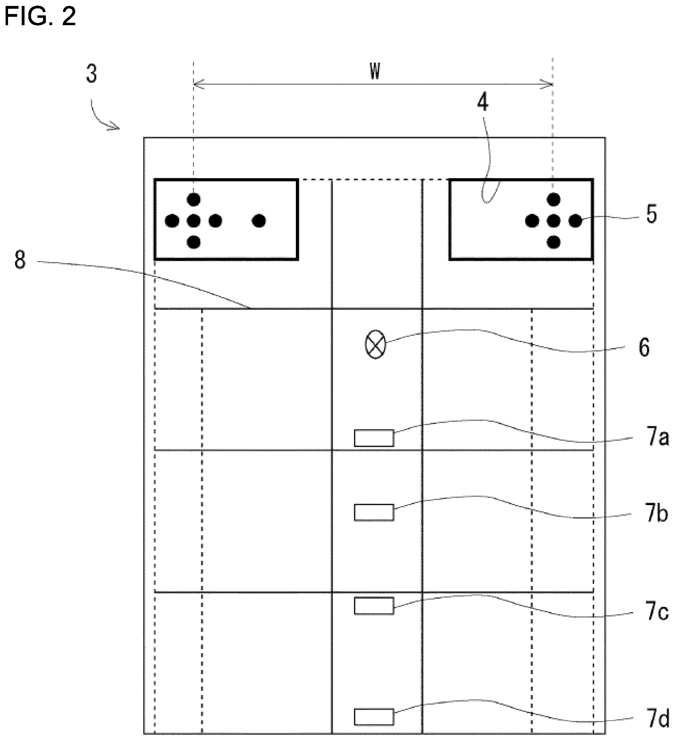

FIG. 2 is a schematic diagram of the background plate 3 having the reference marks for aligning the growth point of the plant and the indicators indicating the lengths below the growth point, showing the surface features of the background plate 3. As described above, the dimensional measurement of, for example, the diameter of the plant stem 2 is performed by placing the background plate 3 shown in FIG. 2 behind the plant, capturing the image with the imager 1, and analyzing the image after the imaging operation. The background plate 3 includes two marker areas 4 in the upper right and upper left in the direction shown in FIG. 2, and multiple markers 5 in each of the marker areas 4. The vertical direction of the background plate 3 in an imaging operation may be reversed upside down. The markers 5 may be located near the lower end in the direction shown in FIG. 2. The markers 5 herein each correspond to a dimensional reference in an aspect of the present invention.

The captured image of the plant stem 2 with the background plate 3 placed behind the plant stem 2 includes the multiple markers 5 with predetermined reference position coordinates. The diameter of the plant stem 2 can be measured based on the number of pixels between the multiple markers 5 and the number of pixels in the width of the target plant stem 2. A distance W between the markers 5 in FIG. 2 is, for example, 30 cm. Each marker 5 is typically a solid circle. At least one marker 5 may be included in each of the two marker areas 4. In an imaging operation with the imager 1, the marker areas 4 are defined to be fully within the imaging range. In an imaging operation, the marker areas 4 are to avoid being shadowed.

The background plate 3 includes a growth point positional reference 6. In capturing an image of the plant stem 2, the plant growth point is aligned with the growth point positional reference 6. The background plate 3 also includes measurement indicators 7a to 7d. The distances from the growth point positional reference 6 to the respective measurement indicators are 10 cm, 15 cm, 20 cm, and 30 cm. In the analysis using the image analysis program, the position at 20 cm below the growth point is the dimensional measurement point of the plant stem 2. In capturing an image of the plant with the imager 1, the measurer can determine the position of the measurement indicator 7c to be a reference to the dimensional measurement point. The measurement indicators 7a to 7d correspond to the indicators in an aspect of the present invention.

The background plate 3 also includes measurement lines 8 that can be used to measure, for example, the width of plant leaves. The solid lines that intersect vertically and horizontally on the background plate 3 shown in FIG. 2 are all the measurement lines. Although the solid lines actually include scales to assist the dimensional measurement, the scales are not shown in FIG. 2. The plant for which an image is to be captured may not be located in the middle and may be at an angle for the imaging operation when the marker areas 4 are in the imaging range.

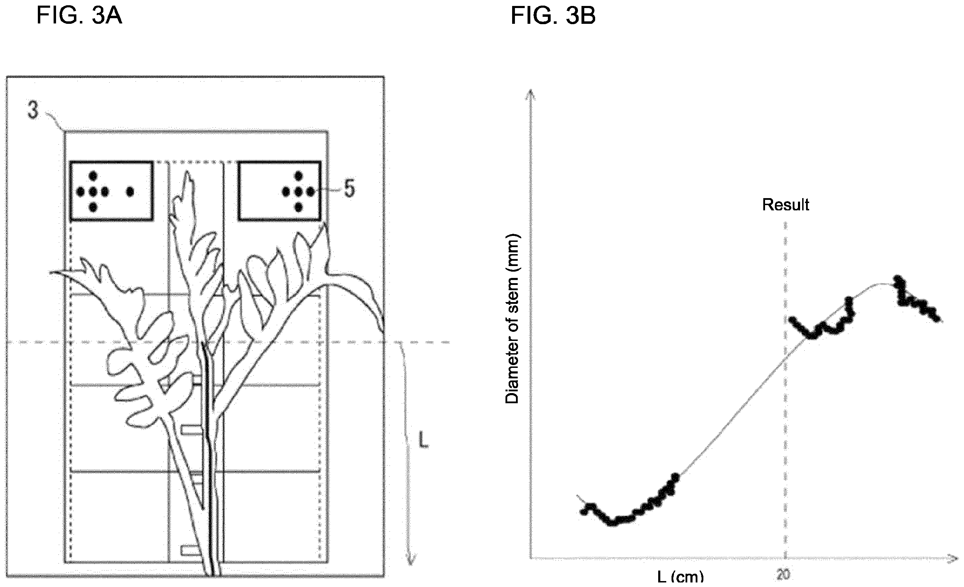

FIG. 3A and FIG. 3B are schematic diagrams of a method for measuring a diameter of the plant stem 2 using the image analysis program after the imaging operation. The image analysis program is prepared to calculate the diameter of the plant stem 2 at the dimensional measurement point using the image including the plant stem 2 and the background plate 3 captured with the imager 1. The image analysis program may be loaded into a common personal computer (PC) (not shown), be stored into a memory such as a read-only memory (ROM) included in the PC, and be executed by a central processing unit (CPU) included in the PC. For the imager 1 being a common digital camera, an image captured with the imager 1 is imported into the PC before being loaded and analyzed by the image analysis program. For the imager 1 being a smartphone or a tablet PC, for example, an image analysis program can also be loaded into the smartphone or the tablet PC for analyzing the image directly after the imaging operation. FIG. 3A is a schematic diagram of a captured image of the plant stem 2. With the image analysis program being executed, tracing from the upper end of the plant for which the image is captured downward in the direction of the plant stem 2 allows display of the traced trajectory on the image. The traced trajectory is indicated by a bold line in FIG. 3A. The starting point of the traced trajectory is the plant growth point. The dimensional measurement point of the plant stem 2 is at 20 cm below the growth point.

In the image analysis program, the diameter of the stem is measured at multiple points in the above trajectory to calculate the diameter of the stem 2 at the dimensional measurement point. More specifically, the distance (the number of pixels) between the two edges of the stem in the horizontal direction of the multiple points in the above trajectory is determined based on the distance (the number of pixels) between the markers 5 on the background plate 3. The stem diameter at each of the multiple points is obtained by multiplying the obtained number of pixels by the pitch between the pixels.

In the analysis using the image analysis program, as shown in FIG. 3B, the diameter values of the stem in accordance with the value L at multiple points selected above and below the respective measurement indicators 7a to 7d shown in FIG. 3A are displayed as fragmented dots in the graph of the approximate curve. The approximate curve is then obtained from at displayed points, and the diameter values of the stem for every value L are displayed with the dots. Further, the diameter of the stem at L = 20 is calculated using the approximate curve as the measurement value of the diameter of the plant stem 2. This is because the stem diameter at the dimensional measurement point at 20 cm below the growth point is a more reliable measurement value of the stem diameter. Calculating the stem diameter at the dimensional measurement point at 20 cm below the growth point based on the data at the multiple points can thus yield a more reliable value. In this case, the measurement may not include the measurement at a position indicated by the measurement indicator 7c. For example, an approximate curve may be obtained at multiple points indicated by the measurement indicators 7b and 7d to calculate the stem diameter at the dimensional measurement point at L = 20. An approximate curve may also be obtained at other multiple points. The multiple points in this case may be selected to be above and below the dimensional measurement point at L = 20. This improve the calculation accuracy of the diameter calculation at L = 20. A quadratic function y = 2E⁻⁰⁸x⁴ - 2E⁻⁰⁵x³ + 0.006x² - 0.7284x + 35.473 can be used as the approximate curve in the present embodiment.

In an imaging operation, the plant stem 2 may be covered by branches or leaves of the plant. With the covered portion of the plant stem 2 not identified in the analysis, the plant stem 2 may be determined as being discontinuous. Any such discontinuous portion may be complemented with an additional straight line or an additional spline curve on the captured image. The image analysis thus identifies the plant stem 2 as being continuous.

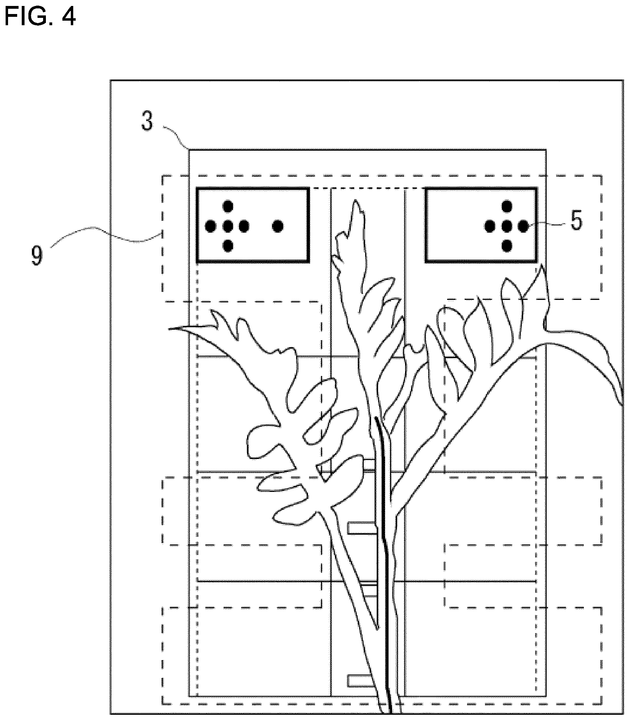

FIG. 4 is a schematic diagram of an imaging mask 9 on an imaging screen viewed by the measurer when an image of the plant stem 2 and the background plate 3 is captured with the imager 1. To facilitate positioning of the plant stem 2 on the imaging screen, the imaging mask 9 in the shape of a Chinese character indicated with dotted lines is displayed. Although simplified in FIG. 4, the imaging mask 9 is bright inside the shape of the Chinese character indicated with the dotted lines, with the outside being shadowed and not clearly visible to the measurer. The plant stem 2 and the marker areas 4 are to be within the area of the imaging mask 9 for an imaging operation. In the present embodiment, the imaging mask 9 is displayed on the imaging screen viewed by the measurer in an imaging operation with the imager 1, and the plant stem 2 and the marker areas 4 are located within the frame. This allows the positional relationship between the plant stem 2 and the background plate 3 to be easily determined, thus improving the measurement accuracy of the diameter of the plant stem 2. The imaging mask 9 is simply a tool to facilitate the positioning of the plant stem 2 and may be optional on the imaging screen. The imaging mask 9 may not be in the shape of a Chinese character indicated with the dotted lines, and may be, for example, T-shaped, when the plant stem 2 and the marker areas 4 are within the frame. The imaging mask 9 may not have the shape of a character, and may have, for example, the shape of a plus sign.

### [Second Embodiment]

A second embodiment of the present invention will now be described. When the imager 1 is used to capture an image of the plant stem 2, the structure according to the present embodiment uses a background plate having a smaller surface area than the background plate 3 described in the first embodiment and having a T shape reversed upside down. The background plate having the T shape reversed upside down is a mere example in the present embodiment, and is not intended to limit the shape of the background plate. The background plate having the T shape reversed upside down will now be simply referred to as the background plate 3 corresponding to the background plate 3 in the first embodiment.

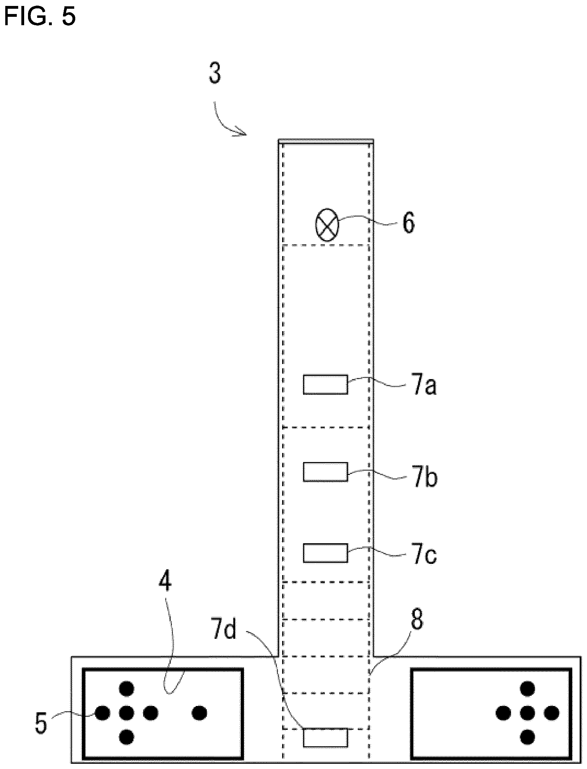

FIG. 5 is a schematic diagram of a background plate 3 with another shape in a modification. The background plate 3 has the T shape reversed upside down. When being placed behind the plant stem 2 in an imaging operation, the background plate 3 includes a horizontal portion extending horizontally and a vertical portion extending vertically from the middle of the horizontal portion in the horizontal direction. The horizontal portion includes markers 5 on both ends across the vertical portion. The vertical portion includes the growth point positional reference 6 and the measurement indicators 7a to 7d aligned vertically. The background plate 3 having the T shape upside down has a smaller surface area than the background plate 3 having a rectangular shape of the same length and width, and can reduce the likelihood that the distance increases between the plant stem 2 and the background plate 3 in the front-rear direction when the plant growth point is three-dimensional and has branches and leaves. This allows highly accurate calculation of the diameter of the dimensional measurement point of the plant stem 2.

The method for measuring a dimension according to the present embodiment allows highly accurate measurement of the diameter of the plant stem 2 with little contact with the plant stem 2 except its contact for fixing the plant stem 2. In general, plants are to achieve an optimal growth balance in each stage of growth. Measuring the diameter of the plant stem 2 provides an indicator to manage the vegetative growth for the growth balance. In the above embodiments, the diameter of the plant stem is measured as the dimension of the plant stem. However, the radius or the width of the plant may also be used as the dimension to be measured. The approximate curve for calculating the diameter at the dimensional measurement point using the diameter values at multiple points in the image analysis program is not limited to the curve described above. The quadratic function may be replaced by a polynomial, an exponential function, a logarithmic function, a trigonometric function, a predetermined spline function, or any other function.

The elements in the aspects of the present invention below are identified with reference numerals used in the drawings to show the correspondence between these elements and the components in the embodiments.

### Aspect 1

A method for measuring a dimension of a plant at a predetermined dimensional measurement point of a stem (2) of the plant with an image of the stem (2) captured with an imager (1), the method comprising:
placing, behind the plant, a background plate (3) including a dimensional reference (5);
measuring the dimension of the plant at a plurality of points along the stem; and
calculating the dimension of the plant at the dimensional measurement point based on data obtained at the plurality of points.

### REFERENCE SIGNS LIST

- 1: imager
- 2: plant stem
- 3: background plate
- 4: marker area
- 5: marker
- 6: growth point positional reference
- 7a to 7d: measurement indicator
- 8: measurement line
- 9: imaging mask

## Claims

1. A method for measuring a dimension of a plant at a predetermined dimensional measurement point of a stem of the plant with an image of the stem captured with an imager, the method comprising:
placing, behind the plant, a background plate including a dimensional reference;
measuring the dimension of the plant at a plurality of points along the stem; and
calculating the dimension of the plant at the dimensional measurement point based on data obtained at the plurality of points.

2. The method according to claim 1, wherein
the dimensional measurement point is at a predetermined length below a growth point of the plant,
the dimension includes a diameter or a width of the stem, and
the calculating the dimension of the plant at the dimensional measurement point includes obtaining an approximate curve of a relationship between the dimension of the plant at the plurality of points and lengths from the growth point at the plurality of points.

3. The method according to claim 1 or claim 2, wherein
the background plate includes a mark indicating a positional reference of the growth point and a plurality of indicators located at predetermined lengths from the mark.

4. The method according to any one of claims 1 to 3, wherein
the background plate includes a horizontal portion extending horizontally and a vertical portion extending vertically from a middle of the horizontal portion in a horizontal direction when placed behind the plant, and the background plate has a T shape reversed upside down,
the dimensional reference is located in each of portions of the horizontal portion across the vertical portion in the horizontal direction, and
the mark indicating the positional reference of the growth point and the plurality of indicators are arranged vertically in the vertical portion.

5. The method according to any one of claims 1 to 4, further comprising:
capturing an image of the dimensional measurement point, the capturing including
displaying an imaging mask being a frame on an imaging screen of the imager, and
placing the dimensional measurement point and the dimensional reference at a predetermined position inside the imaging mask on the imaging screen of the imager to determine a positional relationship between the dimensional measurement point and the dimensional reference.
